# EUROPEAN PATENT SPECIFICATION

(11) **EP 4 092 395 B1**
(45) Date of publication and mention of the grant of the patent: **02.04.2025**
(21) Application number: 21174686.2
(22) Date of filing: 19.05.2021
(51) Int. Cl.: A01G 31/02, G01F 23/38

(54) **LIQUID LEVEL DETERMINATION UNIT**
FLÜSSIGKEITSSTANDBESTIMMUNGSEINHEIT
UNITÉ DE DÉTERMINATION DE NIVEAU DE LIQUIDE

(43) Date of publication of application: 23.11.2022
(73) Proprietor: BSH Hausgeräte GmbH, 81739 München (DE)
(72) Inventor: Dornik, Primoz, 3270 Lasko (SI); Holcinger, Tadej, 3220 Store (SI); Obid, Marko, 1262 Dol pri Ljubljani (SI)

(56) References cited:
- WO-A1-2006/076968
- DE-A1- 102017 108 236
- JP-A- 2011 085 451
- JP-A- H11 281 466
- JP-B2- 6 365 886
- US-A1- 2004 226 365
- US-A1- 2004 261 525
- US-A1- 2005 247 128
- US-A1- 2006 000 279
- US-A1- 2006 277 986
- US-B2- 9 709 435

## Description

The present document relates to a unit for determining the level of liquid, in particular of water, within a liquid container, notably for use within an indoor hydroponic system.

An indoor hydroponic system may be used for growing plants such as vegetable plants and/or aromatic plants. The quality and/or the growth rate of the plants typically depends on the environmental conditions within the hydroponic system, such as the lighting conditions and/or the water level within the water container of the hydroponic system.

US 2006/277986 A1, US 2004/226365 A1, WO 2006/076968 A1, US 2004/261525 A1, JP 2011 085451 A, DE 10 2017 108236 A1, US 9 709 435 B2, JP H11 281466 A, JP 6 365886 B2, US 2005/247128 A1, and US 2006/000279 Al each disclose units for determining the level of liquid.

The present document addresses the technical problem of determining the level of liquid within a liquid container in an efficient and precise manner, notably for increasing the comfort of use and the performance of an indoor hydroponic system. The technical problem is solved by the independent claim.

Preferred examples are described in the dependent claims.

According to an aspect, a level determination unit is configured to determine measurement data regarding the fill-level of a liquid (in particular of water) within a container. The level determination unit may be part of a system comprising a liquid container, such as a hydroponic system.

The level determination unit comprises a float configured to float on the surface of the liquid within the container. The float may be hollow. In addition, the level determination unit comprises a rotatable head which is configured to rotate around a (fixed) rotation axis. The head and/or the rotation axis may be located within the container. The head comprises a magnetic edge at the far side of the rotation axis. The magnetic edge may be formed by a segment of a circular disk around the rotation axis. Hence, the magnetic edge may correspond to a segment of a circle around the rotation axis. The circle may have a radius of 5cm or more. The magnetic edge may have a total length of 4cm or more.

The head is configured to generate a magnetic field with varying field strength along the magnetic edge. In other words, the magnetic edge of the head exhibits a magnetic field, wherein the field strength of the magnetic field changes along the magnetic edge. The magnetic field at the magnetic edge of the head is generated by at least two (permanent) magnets.

Furthermore, the level determination unit comprises a magnetic sensor which is configured to provide measurement data regarding the field strength of the magnetic field within a sensing area of the magnetic sensor. In other words, a magnetic sensor (e.g., a Hall effect sensor) may be provided to sense the field strength of the magnetic field at the magnetic edge of the rotatable head.

The level determination unit further comprises a lever coupling the float to the head. The lever, the float and the head may be fixed to one another. In particular, the lever, the float and the head may form a single part of the level determination unit.

The lever, the float and the head are designed such that, in reaction to a movement of the float caused by a changing fill-level of the liquid within the container, the head rotates around the rotation axis to move different sections of the magnetic edge of the head into the sensing area of the magnetic sensor. Hence, the lever, the float and the head are used to translate a changing fill-level of the liquid into a rotation of the head and by that into a changing magnetic field strength within the sensing area of the magnetic sensor. As a result of this, the fill-level of liquid within a container can be measured in a precise and robust manner. Furthermore, the determination unit allows the fill-level to be measured in a reliable manner without using electrical components that are in contact with the liquid.

The level determination unit is configured such that a first section of the magnetic edge lies within the sensing area of the magnetic sensor, when the fill-level is at a first level (e.g., a minimum level). Furthermore, the level determination unit is configured such that a second section of the magnetic edge lies within the sensing area of the magnetic sensor, when the fill-level is at a second level (e.g., a maximum level). The first section of the magnetic edge corresponds to a first rotation angle of the head around the rotation axis, and the second section of the magnetic edge corresponds to a second rotation angle of the head around the rotation axis. The angular difference between the first rotation angle and the second rotation angle may be between 15° and 35°.

The level determination unit is configured such that as the fill-level changes from the first level to the second level, the head rotates from the first rotation angle to the second rotation angle, thereby moving different sections between the first section and the second section of the magnetic edge progressively into the sensing area of the magnetic sensor. The different sections starting from the first section and going to the second section of the magnetic edge may correspond to different rotation angles starting from the first rotation angle and going to the second rotation angle.

Hence, in reaction to the fill-level changing progressively from the first level to the second level, the rotatable head is rotated such that progressively different sections of the magnetic edge are moved into the sensing area of the magnetic sensor. As a result of this, the fill-level is measured in a particularly precise manner based on the varying field strength of the magnetic field at the magnetic edge of the rotatable head.

The level determination unit is configured such that the field strength of the magnetic field at the first section of the magnetic edge has a first value, and such that the field strength of the magnetic field at the second section of the magnetic edge has a second value. The field strength of the magnetic field increases or decreases monotonically within the different sections between the first section and the second section of the magnetic edge. By making use of a magnetic field with a monotonically increasing or decreasing field strength along the magnetic edge, the fill-level is measured in a particularly precise manner based on the measurement data captured by the magnetic sensor.

The magnetic edge may comprise at least N different sections between the first section and the second section, with corresponding N different field strength values of the magnetic field. N may be equal to 5 or more, or 10 or more. The magnetic sensor may be configured to distinguish the N different field strength values. In other words, the magnetic sensor may have a sensitivity which is sufficiently high to provide different measurement data for the N different field strength values. As a result of this, the fill-level may be measured in a precise and (almost) continuous manner.

The field strength of the magnetic field preferably increases or decreases monotonically within the different sections between the first section and the second section of the magnetic edge, such that the magnetic field has different field strength values within each section between the first section and the second section of the magnetic edge and/or such that a field strength value of the magnetic field uniquely identifies the section between the first section and the second section of the magnetic edge, which is placed within the sensing area of the magnetic sensor. In other words, the magnetic field strength is varying between the first value (at the first section of the magnetic edge) and the second value (at the second section of the magnetic edge) in a strictly monotonic manner, preferably in a substantially linear manner, thereby allowing the fill-level to be determined in a particularly precise manner.

As indicated above, the first level may be the minimum fill-level of the liquid within the container (e.g., in order to allow for a reliable operation of the system within which the level determination unit is used), and the second level may be the maximum fill-level of the liquid within the container (e.g., in order to prevent liquid from spilling over the rim of the container). The first value of the field strength may be one of a minimum value or a maximum value of the field strength, and the second value of the field strength may be the other one of the minimum value or the maximum value of the field strength. Hence, the magnetic field may vary between a minimum value and a maximum value, as the fill-level varies between a minimum level and a maximum level. The minimum value of the field strength corresponds to the field strength of the south pole of a magnet and the maximum value of the field strength corresponds to the field strength of the north pole of a magnet. Hence, a strongly varying magnetic field may be provided at the magnetic edge, thereby allowing the fill-level to be measured in a particularly precise manner.

The rotatable head comprises, at the first section of the magnetic edge, a first (permanent) magnet. Furthermore, the rotatable head comprises, at the second section of the magnetic edge, a second magnet. A first pole of the first magnet is facing the magnetic edge, and a second pole of the second magnet is also facing the magnetic edge. The first pole may be the north pole and the second pole may be the south pole, or alternatively the first pole may be the south pole and the second pole may be the north pole.

The magnetic field at the magnetic edge shows an overlay of the first magnetic field generated by the first magnet and the second magnetic field generated by the second magnet, thereby providing a varying magnetic field in an efficient and reliable manner.

The first magnet is positioned on a first radial beam extending away from the rotation axis at the first rotation angle, and the second magnet is positioned on the second radial beam extending away from the rotation axis at the second rotation angle. By doing this, it is achieved that the minimum value of the field strength of the magnetic field lies within the first section and the maximum value of the field strength of the magnetic field lies within the second section of the magnetic edge (or vice versa).

The magnetic axis between the north pole and the south pole of the first magnet deviates from the first radial beam and is turned towards the second radial beam. In a similar manner, the magnetic axis between the south pole and the north pole of the second magnet deviates from the second radial beam and is turned towards the first radial beam. By doing this, a magnetic field with a field strength that is strictly monotonic may be provided.

The first magnet and the second magnet are placed on a line linking the first radial beam with the second radial beam, such that the first radial beam, the second radial beam and the line form a triangle, in particular an equilateral triangle (with the radial beams having equal length). The magnetic axis of the first magnet and the magnetic axis of the second magnet are perpendicular to the line (e.g., with a maximum deviation of ±5° from being perpendicular). As a result of this, a magnetic field with a field strength that is strictly monotonic may be provided.

The level determination unit may comprise a control module which is configured to determine a value of the fill-level of the container based on the measurement data of the magnetic sensor using a field strength function. The field strength function typically depends on and/or describes the magnetic field at the magnetic edge of the rotatable head. In particular, the field strength function may depend on and/or may describe the evolution of the field strength of the magnetic field along the magnetic edge. The field strength function may be a monotonic function, in particular a strictly monotonic function

(in accordance with the evolution of the field strength of the magnetic field along the magnetic edge of the rotatable head of the level determination unit).

The field strength function may be configured to map different values of the field strength of the magnetic field to corresponding values of the fill-level or to corresponding values of the rotation angle of the head. By making use of a pre-determined field strength function, the fill-level of the container may be determined in a particularly precise manner.

According to a further aspect, a system comprising a liquid container is described. The system comprises the level determination unit described herein, which is configured to determine measurement data regarding the fill-level of the liquid within the liquid container. In a preferred example, the system is a hydroponic system. Alternative systems may be a coffee machine or a water dispenser.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
- Figure 1: shows a hydroponic system;
- Figure 2: illustrates a determination unit for determining the liquid level within a liquid container;
- Figures 3a to 3c: show example components of the liquid level determination unit of Fig. 2;
- Figure 4: shows an example field strength function of the magnetic field strength measured by the magnetic sensor of the liquid level determination unit as a function of the rotation angle of the rotatable head of the determination unit; and
- Figure 5: shows a flow chart of an example method for determining the level of liquid within a liquid container.

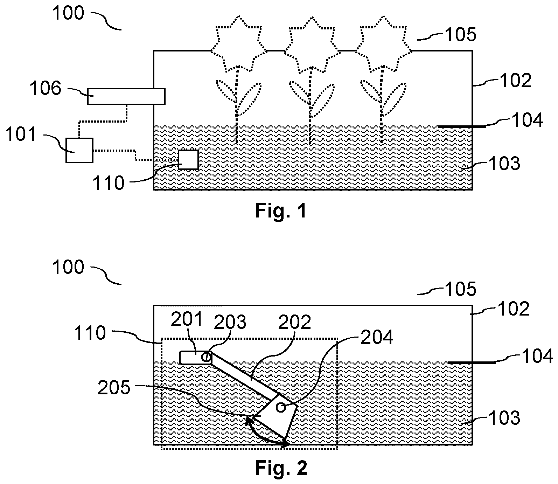

As outlined above, the present document is directed at determining the level of liquid within a liquid container in an efficient and precise manner, in particular for use within an indoor hydroponic system. In this context, Fig. 1 shows a block diagram of an example hydroponic system 100 which comprises a liquid container 102 which is filled with a liquid 103, in particular water, up to a certain fill-level 104. The liquid 103 typically comprises nutrients for plants 105 which are grown within the hydroponic system 100.

The system 100 may comprise a control module 101 which is configured to determine the fill-level 104 of the liquid container 102 using a level determination unit 110. Furthermore, the control module 101 may be configured to control a valve or pump 106 for adding liquid 103 to the container 102, in dependence of the actual fill-level 104, e.g., to ensure that the actual fill-level 104 stays between a pre-determined minimum level and a pre-determined maximal level.

Fig. 2 shows a level determination unit 110. The level determination unit 110 comprises a float 201 which is configured to float on the surface of the liquid 103 within the liquid container 102. The float 201 is attached to a lever or arm 202, e.g., via a pivot 203 to allow the float 201 to be inclined with regards to the lever 202 as the fill-level 104 of liquid 103 within the container 102 changes.

The lever 202 is fixed to a rotatable head 205 of the determination unit 110, wherein the head 205 is pivot-mounted to a rotation axis 204. In particular, the head 205 is mounted to the rotation axis 204 such that the lever 202 rotates the head 205 around the rotation axis 204 as the float 201 moves up or down with changing fill-level 104 of the liquid container 102. Hence, the determination unit 110 comprises a float 201, a lever 202 and a rotatable head 205, which are configured to translate a change in fill-level 104 of the liquid container 102 into a rotation of the rotatable head 205 around the rotation axis 204. The rotation of the head 205 is illustrated by the double arrow in Fig. 2

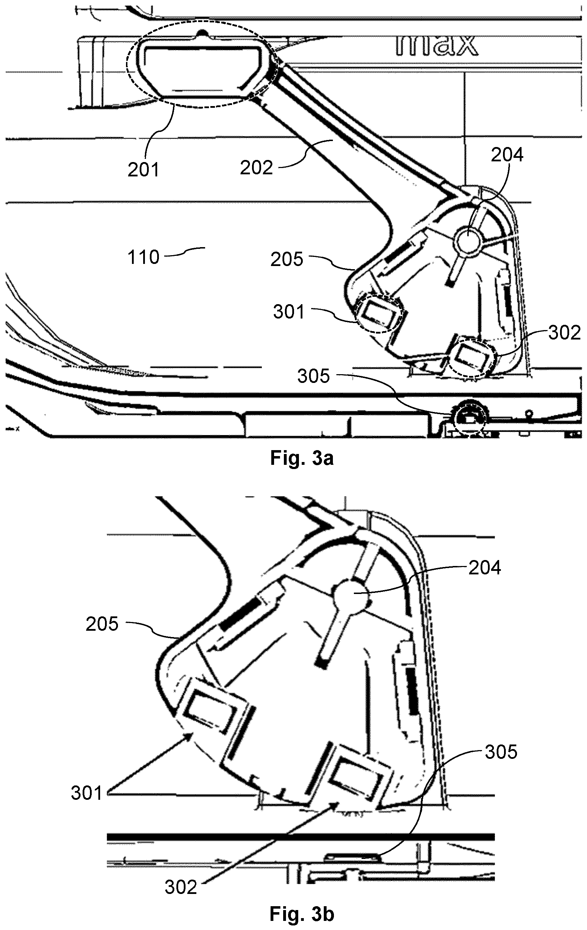

Figs. 3a to 3c show further details regarding the level determination unit 110. The rotatable head 205 may have the form of a segment of a circular disk 320 that has the rotation axis 204 at its center. The segment may span an angular range, e.g., between 15° and 35° of the circular disk. The edge 321 of the head 205, which is positioned at the far side of the rotation axis 204, may therefore correspond to a segment of a circle around the rotation axis 204.

The edge 321 of the head 205 at the far side of the rotation axis 204 may be referred to as the magnetic edge, because the head 205 is configured to generate a magnetic field at this edge 321 of the head 205, wherein the field strength, in particular the magnetic flux density, of the magnetic field changes along the magnetic edge 321 of the head 205. The magnetic field is generated using a first magnet 301 with a first orientation at a first section of the edge 321 of the head 205 and a second magnet 302 with a second orientation at a second section of the edge 321 of the head 205.

The level determination unit 110 comprises a magnetic sensor 305, in particular a Hall sensor, which is configured to capture measurement data regarding the field strength, in particular the magnetic flux density, of a magnetic field within the sensing area of the magnetic sensor 305. The magnetic sensor 305 is positioned such that different perimeter sections of the magnetic edge 321 of the head 205 may be moved into the sensing area of the magnetic sensor 305, as the head 205 is rotated around the rotation axis 204.

The lever 202 and the float 201 form a so-called float-lever. The float-lever is configured to rotate the head 205 such that the first section of the magnetic edge 321 is positioned within the sensing area of the magnetic sensor 305, when the fill-level 104 of the container 102 is at a minimum level. Furthermore, the float-lever is configured to rotate the head 205 such that the second section of the magnetic edge 321 is positioned within the sensing area of the magnetic sensor 305, when the fill-level 104 of the container 102 is at a maximum level. In addition, the float-lever is configured to rotate the head 205 such that a perimeter section between the first and the second section of the magnetic edge 321 is positioned within the sensing area of the magnetic sensor 305, when the fill-level 104 of the container 102 is between the minimum level and the maximum level. Hence, different perimeter sections between the first and the second section of the magnetic edge 321 are positioned within the sensing area of the magnetic sensor 305 for different fill-levels 104 of the container 102. In particular, the float-lever is configured to move different perimeter sections of the magnetic edge 321, starting at the first section up to the second section, as the fill-level 104 increases, starting from the minimum level up to the maximum level.

As indicated above, the magnetic field at the magnetic edge 321 of the rotatable head 205 changes with changing perimeter section of the edge 321. As a result of this, the field strength which is sensed by the magnetic sensor 305 changes as the perimeter section of the magnetic edge 321, which is positioned within the sensing area of the magnetic sensor 305, changes from the first section to the second section. As a result of this, the field strength which is measured by the magnetic sensor 305 is taken as an indicator of the perimeter section of the magnetic edge 321, which is positioned within the sensing area of the magnetic sensor 305, and by consequence as an indicator of the fill-level 104 of the liquid 103 within the liquid container 102.

The first section of the magnetic edge 321, where the first magnet 301 is positioned, may correspond to a first rotation angle of the head 205 around the rotation axis 204, and the second section of the magnetic edge 321, where the second magnet 302 is positioned, may correspond to a second rotation angle of the head 205 around the rotation axis 204. The first and second rotation angles may have an angular distance between 15° and 35°. The float-lever may be configured to rotate the head 205 between the first and the second rotation angle, in dependence of the fill-level 104 of the container 102.

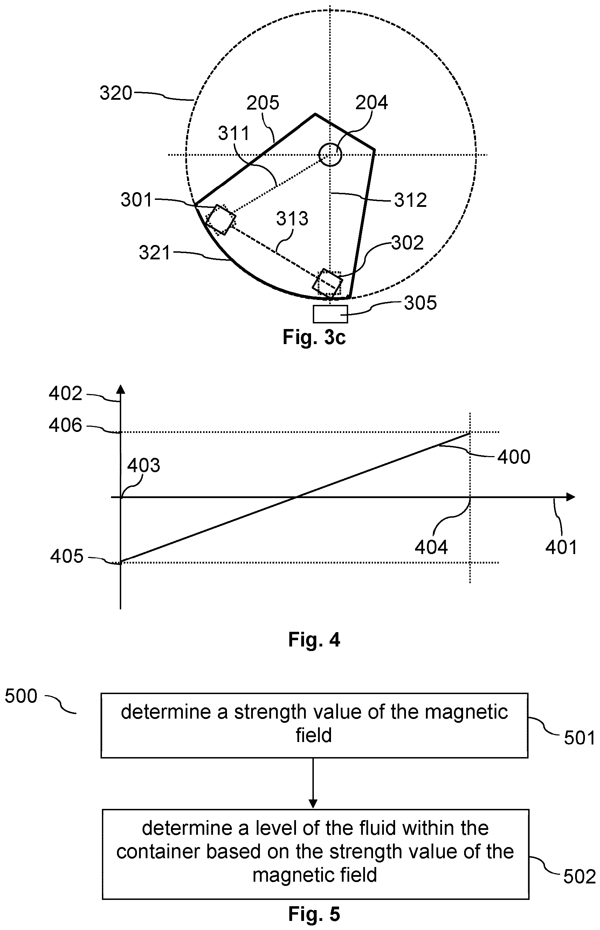

Fig. 4 shows an example field strength function 400, which indicates the field strength 402 of the magnetic field at the magnetic edge 321 of the head 205 as a function of the rotation angle 401 of the head 205. It can be seen that the field strength 402 has a first value 405 (e.g., a minimum value) at the first rotation angle 403 and a second value 406 (e.g., a maximum value) at the second rotation angle 404. In an ideal case, the field strength function 400 should be a linear function (as shown in Fig. 4), thereby providing a linear relationship between the rotation angle 401 and the field strength 402 of the magnetic field at the magnetic edge 321 of the rotatable head 205. As a result of this, the rotation angle 401 can be determined in a particularly precise manner based on the measured field strength. This allows the fill-level 104 of the container 102 to be determined in a particularly precise manner.

In order to generate a magnetic field at the magnetic edge 321 of the head 205, which changes from the first value 405 at the first rotation angle 403 up to the second value 406 at the second rotation angle 404, the first magnet 301 may be configured to generate a first magnetic field with a field strength that corresponds to the first value 405 and the second magnet 302 may be configured to generate a second magnetic field with a field strength that corresponds to the second value 406. At rotation angles 401 between the first rotation angle 403 and the second rotation angle 404 the first and the second magnetic fields overlap and/or combine, thereby providing a magnetic field with a field strength that lies between the first value 405 and the second value 406.

The first magnetic field and the second magnetic field might combine such that the resulting field strength function 400 deviates from a linear function, in particular such that the resulting field strength function 400 exhibits an intermediate section with a constant field strength 402. An intermediate section with a constant field strength 402 leads to a situation where a measured field strength 402 cannot be mapped to a unique rotation angle 401. By consequence, different fill-levels 104 of the container 102 may lead to the same field strength 402, such that the fill-level 104 cannot be determined in a precise manner anymore. Hence, the field strength function 400 of the magnetic field at the magnetic edge 321 of the rotatable head 205 should at least be strictly monotonic.

Experiments have shown that a field strength function 400 with a flat intermediate section (i.e., a field strength function 400 which is not strictly monotonic) may result from magnets 301, 302 that are placed in radial directions on the radial beams 311, 312 that originate at the rotation axis 204. This is illustrated by the dotted boxes (representing the magnets 301, 302) in Fig. 3c. On the other hand, when turning the magnets 301, 302 towards each other, in particular such that the first and the second magnet 301, 302 are arranged in parallel with respect to one another, as illustrated by the solid boxes (representing the magnets 301, 302) in Fig. 3c, a strictly monotonic, in particular a linear, field strength function 400 may be provided.

Fig. 3c shows a line 313 between the first magnet 301 and the second magnet 302. Both magnets 301, 302 may have identical orientations with regards to this line 313. The negative pole of the first magnet 301 may be facing the magnetic edge 321, and the positive pole of the second magnet 302 may be facing the magnetic edge 321. By orienting the first magnet 301 and the second magnet 302 as outlined above, a field strength function 400 may be obtained, which is substantially linear.

Hence, a level determination unit 110 is described, which allows detecting and monitoring the water level 104 in an indoor hydroponics system 100 in a precise and efficient manner. The determination unit 110 comprises mechanical, magnetic and/or electrical components. Furthermore, the determination unit 110 allows determining the water level from a minimum value up to a maximum value.

The float 201 of the determination unit 110 may be positioned in a bowl or container 102 with water 103. The float 201 is attached via a lever 202 to a rotation axis 204 and is configured to rotate a head 205 with two magnets 301, 302 around the rotation axis 204. The float 201 itself may be hollow and sealed, which enables the float 201 to float on the surface of the water 103. The float 201 is attached to one end of the lever 202 and the head 205 is attached to the other end of the lever 202.

The two magnets 301, 302 of the head 205 are positioned such that one magnet 302 has the north pole directed downwards and the other one has the south pole directed downwards (towards the magnetic sensor 305). Such a position and orientation of the magnets 301, 302 provides a substantially linear response of the magnetic sensor 305, in particular of the hall effect sensor, when the head 205 rotates around the rotation axis 204 subject to the float 201 moving between the minimum fill-level to the maximum fill-level.

The level determination unit 110 enables the detection and the monitoring of the water level 104 in a hydroponic system 100 within the entire range from the minimum fill-level up to the maximum fill-level, in a continuous manner. The measurement data from the level determination unit 110, in particular from the magnetic sensor 305 of the level determination unit 110, may be used to check the water level 104 in real time, to turn off the pump 106 at low or high water level 104, to inform the user of the system 100 when to add water 103, etc. The level determination unit 110 does not comprise any electrical components which are in contact with water 103, thereby providing a robust and efficient level determination unit 110.

Fig. 5 shows a flow chart of a (e.g., computer-implemented) method 500 for determining the fill-level 104 of a container 102 using the level determination unit 110 described herein. The method 500 may be executed on a control module 101. The method 500 comprises determining 501 measurement data regarding the value of the field strength 402 of the magnetic field within the sensing area of the magnetic sensor 305. Furthermore, the method 500 comprises determining 502 the value of the fill-level 104 based on the measurement data using a pre-determined field strength function 400, which maps different values of the field strength 402 to different values of the fill-level 104 (or to different values of the rotation angle 401 of the rotatable head 205, which correspond to different values of the fill-level 104).

It should be noted that the description and drawings merely illustrate the principles of the proposed methods and systems. Those skilled in the art will be able to implement various arrangements that, although not explicitly described or shown herein, are included in the scope of the invention as defined in the appended claims.

## Claims

1. A level determination unit (110) configured to determine measurement data regarding a fill-level (104) of a liquid (103) within a container (102); wherein the level determination unit (110) comprises
- a float (201) configured to float on a surface of the liquid (103) within the container (102);
- a head (205) configured to rotate around a rotation axis (204); wherein the head (205) comprises a magnetic edge (321) at a far side of the rotation axis (204); wherein the head (205) is configured to generate a magnetic field with varying field strength (402) along the magnetic edge (321);
- a magnetic sensor (305) configured to provide measurement data regarding the field strength (402) of the magnetic field within a sensing area of the magnetic sensor (305); and
- a lever (202) coupling the float (201) to the head (205), such that, in reaction to a movement of the float (201) caused by a changing fill-level (104) of the liquid (103) within the container (102), the head (205) rotates around the rotation axis (204) to move different sections of the magnetic edge (321) of the head (205) into the sensing area of the magnetic sensor (305); wherein the level determination unit (110) is configured such that
- a first section of the magnetic edge (321) lies within the sensing area of the magnetic sensor (305), when the fill-level (104) is at a first level;
- a second section of the magnetic edge (321) lies within the sensing area of the magnetic sensor (305), when the fill-level (104) is at a second level; and
- different sections between the first section and the second section of the magnetic edge (321) are moved progressively into the sensing area of the magnetic sensor (305), in reaction to the fill-level (104) changing progressively from the first level to the second level;
- wherein
- the head (205) comprises, at the first section of the magnetic edge (321), a first magnet (301);
- the head (205) comprises, at the second section of the magnetic edge (321), a second magnet (302);
- the magnetic field at the magnetic edge (321) is an overlay of a first magnetic field generated by the first magnet (301) and a second magnetic field generated by the second magnet (302);
- a first pole of the first magnet (301) is facing the magnetic edge (321), and a second pole of the second magnet (302) is facing the magnetic edge (321);
- the first pole is the north pole and the second pole is the south pole, or vice versa;
- the first magnet (301) is positioned on a first radial beam (311) extending away from the rotation axis (204) at a first rotation angle;
- the second magnet (302) is positioned on a second radial beam (312) extending away from the rotation axis (204) at a second rotation angle;
- the first magnet (301) and the second magnet (302) are placed on a line (313) linking the first radial beam (311) with the second radial beam (312), such that the first radial beam (311), the second radial beam (312) and the line (313) form a triangle;
- a magnetic axis between a north pole and a south pole of the first magnet (301) is turned towards the second radial beam (312);
- a magnetic axis between a south pole and a north pole of the second magnet (302) is turned towards the first radial beam (311); -so that and **characterized in that** the magnetic axis of the first magnet (301) and the magnetic axis of the second magnet (302) are perpendicular to the line (313).

2. The level determination unit (110) according to claim 1, wherein the level determination unit (110) is configured such that
- the field strength (402) of the magnetic field at the first section of the magnetic edge (321) has a first value;
- the field strength (402) of the magnetic field at the second section of the magnetic edge (321) has a second value; and
- the field strength (402) of the magnetic field increases or decreases monotonically within the different sections between the first section and the second section of the magnetic edge (321).

3. The level determination unit (110) according to claim 2, wherein the field strength (402) of the magnetic field increases or decreases monotonically within the different sections between the first section and the second section of the magnetic edge (321) such that
- the magnetic field has different field strength values within each section between the first section and the second section of the magnetic edge (321); and/or
- a field strength value of the magnetic field uniquely identifies the section between the first section and the second section of the magnetic edge (321), which is placed within the sensing area of the magnetic sensor (305).

4. The level determination unit (110) according to any of claims 2 to 3, wherein
- the first level is a minimum fill-level of the liquid (103) within the container (102);
- the second level is a maximum fill-level of the liquid (103) within the container (102); and
- the first value of the field strength (402) is one of a minimum value (405) or a maximum value (406) of the field strength (402), and the second value of the field strength (402) is the other one of the minimum value (405) or the maximum value (406) of the field strength (402).

5. The level determination unit (110) according to any of claims 2 to 4, wherein
- the magnetic edge (321) comprises at least N different sections between the first section and the second section, with corresponding N different field strength values;
- in particular N equals 5 or more, or 10 or more; and
- the magnetic sensor (305) is configured to distinguish the N different field strength values.

6. The level determination unit (110) according to any of the previous claims, wherein
- the first section of the magnetic edge (321) corresponds to a first rotation angle of the head (205) around the rotation axis (204);
- the second section of the magnetic edge (321) corresponds to a second rotation angle of the head (205) around the rotation axis (204); and
- the different sections starting from the first section and going to the second section of the magnetic edge (321) correspond to different rotation angles (401) starting from the first rotation angle and going to the second rotation angle.

7. The level determination unit (110) according to any of the previous claims, wherein
- the first magnet (301) and the second magnet (302) are permanent magnets.

8. The level determination unit (110) according to any of the previous claims, wherein the first magnet (301) and the second magnet (302) are placed on a line (313) linking the first radial beam (311) with the second radial beam (312), such that the first radial beam (311), the second radial beam (312) and the line (313) form an equilateral triangle.

9. The level determination unit (110) according to any of the previous claims, wherein the level determination unit (110) comprises a control module (101) configured to determine a value of the fill-level (104) of the container (102) based on the measurement data of the magnetic sensor (305) using a field strength function (400) mapping different values of the field strength (402) of the magnetic field to corresponding values of the fill-level (104) or corresponding values of a rotation angle (401) of the head (205).

10. The level determination unit (110) according to claim 9, wherein
- field strength function (400) depends on the magnetic field at the magnetic edge (321) of the head (205), in particular on an evolution of the field strength (402) of the magnetic field along the magnetic edge (321); and
- field strength function (400) is a monotonic function, in particular a strictly monotonic function.

11. System (100) comprising
- a liquid container (102); and
- a level determination unit (110) according to any of the previous claims, configured to determine measurement data regarding a fill-level (104) of a liquid (103) within the liquid container (102).

12. System (100) according to claim 11, wherein the system (100) is a hydroponic system.

## Patentansprüche

1. Pegelbestimmungseinheit (110), die so ausgelegt ist, dass sie Messdaten zu einem Füllstand (104) einer Flüssigkeit (103) in einem Behälter (102) bestimmt, wobei die Pegelbestimmungseinheit (110) Folgendes umfasst:
- einen Schwimmer (201), der so ausgelegt ist, dass er an einer Oberfläche der Flüssigkeit (103) in dem Behälter (102) schwimmt,
- einen Kopf (205), der so ausgelegt ist, dass er sich um eine Rotationsachse (204) dreht, wobei der Kopf (205) auf der von der Rotationsachse (204) entfernt gelegenen Seite einen Magnetrand (321) umfasst, wobei der Kopf (205) so ausgelegt ist, dass er an dem Magnetrand (321) entlang ein Magnetfeld von veränderlicher Feldstärke (402) erzeugt,
- einen Magnetsensor (305), der so ausgelegt ist, dass er Messdaten zur Feldstärke (402) des Magnetfeldes innerhalb eines Erfassungsbereichs des Magnetsensors (305) bereitstellt, und
- einen Hebel (202), der den Schwimmer (201) so mit dem Kopf (205) verbindet, dass sich der Kopf (205) bei einer Bewegung des Schwimmers (201), die durch einen sich verändernden Füllstand (104) der Flüssigkeit (103) in dem Behälter (102) bewirkt wird, um die Rotationsachse (204) dreht und so verschiedene Abschnitte des Magnetrandes (321) des Kopfes (205) in den Erfassungsbereich des Magnetsensors (305) bewegt werden, wobei die Pegelbestimmungseinheit (110) so ausgelegt ist, dass
- ein erster Abschnitt des Magnetrandes (321) im Erfassungsbereich des Magnetsensors (305) liegt, wenn sich der Füllstand (104) auf einem ersten Pegel befindet,
- ein zweiter Abschnitt des Magnetrandes (321) im Erfassungsbereich des Magnetsensors (305) liegt, wenn sich der Füllstand (104) auf einem zweiten Pegel befindet, und
- bei der schrittweisen Änderung des Füllstands (104) vom ersten auf den zweiten Pegel schrittweise verschiedene Abschnitte zwischen dem ersten und dem zweiten Abschnitt des Magnetrandes (321) in den Erfassungsbereich des Magnetsensors (305) bewegt werden,
- wobei
- der Kopf (205) am ersten Abschnitt des Magnetrandes (321) einen ersten Magnet (301) umfasst,
- der Kopf (205) am zweiten Abschnitt des Magnetrandes (321) einen zweiten Magnet (302) umfasst,
- das Magnetfeld am Magnetrand (321) eine Überlagerung eines von dem ersten Magneten (301) erzeugten ersten Magnetfelds und eines von dem zweiten Magneten (302) erzeugten zweiten Magnetfelds ist,
- ein erster Pol des ersten Magneten (301) und ein zweiter Pol des zweiten Magneten (302) zum Magnetrand (321) weisen,
- es sich bei dem ersten Pol um den Nordpol und bei dem zweiten Pol um den Südpol handelt oder umgekehrt,
- der erste Magnet (301) an einem ersten radialen Träger (311) positioniert ist, der sich in einem ersten Drehwinkel von der Rotationsachse (204) weg erstreckt,
- der zweite Magnet (302) an einem zweiten radialen Träger (312) positioniert ist, der sich in einem zweiten Drehwinkel von der Rotationsachse (204) weg erstreckt,
- der erste Magnet (301) und der zweite Magnet (302) auf einer Linie (313) angeordnet sind, die den ersten radialen Träger (311) so mit dem zweiten radialen Träger (312) verbindet, dass der erste radiale Träger (311), der zweite radiale Träger (312) und die Linie (313) ein Dreieck bilden,
- eine Magnetachse zwischen einem Nordpol und einem Südpol des ersten Magneten (301) zu dem zweiten radialen Träger (312) hin zeigt,
- eine Magnetachse zwischen einem Südpol und einem Nordpol des zweiten Magneten (302) zu dem ersten radialen Träger (311) hin zeigt,
- so dass, und **dadurch gekennzeichnet, dass** die Magnetachse des ersten Magneten (301) und die Magnetachse des zweiten Magneten (302) senkrecht zu der Linie (313) verlaufen.

2. Pegelbestimmungseinheit (110) nach Anspruch 1, wobei die Pegelbestimmungseinheit (110) so ausgelegt ist, dass
- die Feldstärke (402) des Magnetfelds am ersten Abschnitt des Magnetrandes (321) einen ersten Wert aufweist,
- die Feldstärke (402) des Magnetfelds am zweiten Abschnitt des Magnetrandes (321) einen zweiten Wert aufweist und
- die Feldstärke (402) des Magnetfelds in den verschiedenen Abschnitten zwischen dem ersten und dem zweiten Abschnitt des Magnetrandes (321) monoton steigt oder fällt.

3. Pegelbestimmungseinheit (110) nach Anspruch 2, wobei die Feldstärke (402) des Magnetfelds in den verschiedenen Abschnitten zwischen dem ersten und dem zweiten Abschnitt des Magnetrandes (321) monoton steigt oder fällt, so dass
- das Magnetfeld in jedem Abschnitt zwischen dem ersten und dem zweiten Abschnitt des Magnetrandes (321) unterschiedliche Werte für die Feldstärke aufweist und/oder
- ein Wert für die Feldstärke des Magnetfelds eindeutig den Abschnitt zwischen dem ersten und dem zweiten Abschnitt des Magnetrandes (321) identifiziert, der im Erfassungsbereich des Magnetsensors (305) angeordnet ist.

4. Pegelbestimmungseinheit (110) nach einem der Ansprüche 2 bis 3, wobei
- es sich bei dem ersten Pegel um einen Mindestfüllstand der Flüssigkeit (103) in dem Behälter (102) handelt,
- es sich bei dem zweiten Pegel um einen Höchstfüllstand der Flüssigkeit (103) in dem Behälter (102) handelt und
- es sich bei dem ersten Wert für die Feldstärke (402) um einen Mindestwert (405) oder einen Höchstwert (406) für die Feldstärke (402) handelt und bei dem zweiten Wert für die Feldstärke (402) um den jeweils anderen Wert davon.

5. Pegelbestimmungseinheit (110) nach einem der Ansprüche 2 bis 4, wobei
- der Magnetrand (321) zwischen dem ersten und dem zweiten Abschnitt mindestens N verschiedene Abschnitte mit N entsprechenden unterschiedlichen Werten für die Feldstärke umfasst,
- N insbesondere mindestens 5 oder mindestens 10 beträgt und
- der Magnetsensor (305) so ausgelegt ist, dass er zwischen den N verschiedenen Werten für die Feldstärke unterscheidet.

6. Pegelbestimmungseinheit (110) nach einem der vorhergehenden Ansprüche, wobei
- der erste Abschnitt des Magnetrandes (321) einem ersten Drehwinkel des Kopfes (205) um die Rotationsachse (204) entspricht,
- der zweite Abschnitt des Magnetrandes (321) einem zweiten Drehwinkel des Kopfes (205) um die Rotationsachse (204) entspricht und
- die verschiedenen Abschnitte vom ersten bis zum zweiten Abschnitt des Magnetrandes (321) verschiedenen Drehwinkeln (401) vom ersten bis hin zum zweiten Drehwinkel entsprechen.

7. Pegelbestimmungseinheit (110) nach einem der vorhergehenden Ansprüche, wobei
- es sich bei dem ersten Magnet (301) und dem zweiten Magnet (302) um Permanentmagneten handelt.

8. Pegelbestimmungseinheit (110) nach einem der vorhergehenden Ansprüche, wobei der erste Magnet (301) und der zweite Magnet (302) auf einer Linie (313) angeordnet sind, die den ersten radialen Träger (311) so mit dem zweiten radialen Träger (312) verbindet, dass der erste radiale Träger (311), der zweite radiale Träger (312) und die Linie (313) ein gleichseitiges Dreieck bilden.

9. Pegelbestimmungseinheit (110) nach einem der vorhergehenden Ansprüche, wobei die Pegelbestimmungseinheit (110) ein Steuermodul (101) umfasst, das so ausgelegt ist, dass es auf der Grundlage der Messdaten aus dem Magnetsensor (305) mithilfe einer Feldstärkefunktion (400), die verschiedene Werte für die Feldstärke (402) des Magnetfelds entsprechenden Werten für den Füllstand (104) oder für einen Drehwinkel (401) des Kopfes (205) zuordnet, einen Wert für den Füllstand (104) des Behälters (102) bestimmt.

10. Pegelbestimmungseinheit (110) nach Anspruch 9, wobei
- die Feldstärkefunktion (400) von dem Magnetfeld am Magnetrand (321) des Kopfes (205), insbesondere von einer Entwicklung der Feldstärke (402) des Magnetfelds entlang des Magnetrandes (321) abhängig ist und
- es sich bei der Feldstärkefunktion (400) um eine monotone, insbesondere eine streng monotone Funktion handelt.

11. System (100), das Folgendes umfasst:
- einen Flüssigkeitsbehälter (102) und
- eine Pegelbestimmungseinheit (110) nach einem der vorhergehenden Ansprüche, die so ausgelegt ist, dass sie Messdaten zu einem Füllstand (104) einer Flüssigkeit (103) in dem Flüssigkeitsbehälter (102) bestimmt.

12. System (100) nach Anspruch 11, wobei es sich bei dem System (100) um ein Hydrokultursystem handelt.

## Revendications

1. Unité de détermination de niveau (110) configurée pour déterminer des données de mesure concernant un niveau de remplissage (104) d'un liquide (103) dans un récipient (102), où l'unité de détermination de niveau (110) comprend :
- un flotteur (201) configuré pour flotter sur une surface du liquide (103) dans le récipient (102),
- une tête (205) configurée pour tourner autour d'un axe de rotation (204), dans laquelle la tête (205) comprend un bord magnétique (321) à un côté éloigné de l'axe de rotation (204), et la tête (205) est configurée pour générer un champ magnétique avec une intensité de champ variable (402) le long du bord magnétique (321),
- un capteur magnétique (305) configuré pour fournir des données de mesure concernant l'intensité de champ (402) du champ magnétique dans une zone de détection du capteur magnétique (305), et
- un levier (202) couplant le flotteur (201) à la tête (205), de sorte qu'en réaction à un mouvement du flotteur (201) provoqué par une variation du niveau de remplissage (104) du liquide (103) dans le récipient (102), la tête (205) tourne autour de l'axe de rotation (204) pour déplacer différentes sections du bord magnétique (321) de la tête (205) jusque dans la zone de détection du capteur magnétique (305), dans laquelle l'unité de détermination de niveau (110) est configurée de sorte que :
- une première section du bord magnétique (321) est située dans la zone de détection du capteur magnétique (305) lorsque le niveau de remplissage (104) est à un premier niveau,
- une deuxième section du bord magnétique (321) est située dans la zone de détection du capteur magnétique (305) lorsque le niveau de remplissage (104) est à un deuxième niveau, et
- des sections différentes entre la première section et la deuxième section du bord magnétique (321) sont déplacées progressivement jusque dans la zone de détection du capteur magnétique (305), en réaction à une variation progressive du niveau de remplissage (104) du premier niveau au deuxième niveau,
dans laquelle :
- la tête (205) comprend, au niveau de la première section du bord magnétique (321), un premier aimant (301),
- la tête (205) comprend, au niveau de la deuxième section du bord magnétique (321), un deuxième aimant (302),
- le champ magnétique au niveau du bord magnétique (321) est une superposition d'un champ magnétique généré par le premier aimant (301) et d'un champ magnétique généré par le deuxième aimant (302),
- un premier pôle du premier aimant (301) est orienté vers le bord magnétique (321), et un deuxième pôle du deuxième aimant (302) est orienté vers le bord magnétique (321),
- le premier pôle est le pôle Nord et le deuxième pôle est le pôle Sud, ou vice-versa,
- le premier aimant (301) est positionné sur une première poutre radiale (311) s'étendant en s'éloignant de l'axe de rotation (204) selon un premier angle de rotation,
- le deuxième aimant (302) est positionné sur une deuxième poutre radiale (312) s'étendant en s'éloignant de l'axe de rotation (204) selon un deuxième angle de rotation,
- le premier aimant (301) et le deuxième aimant (302) sont placés sur une ligne (313) reliant la première poutre radiale (311) à la deuxième poutre radiale (312), de sorte que la première poutre radiale (311), la deuxième poutre radiale (312) et la ligne (313) forment un triangle,
- un axe magnétique entre un pôle Nord et un pôle Sud du premier aimant (301) est tourné vers la deuxième poutre radiale (312),
- un axe magnétique entre un pôle Sud et un pôle Nord du deuxième aimant (302) est tourné vers la première poutre radiale (311),
- de telle manière et **caractérisée en ce que**
- l'axe magnétique du premier aimant (301) et l'axe magnétique du deuxième aimant (302) sont perpendiculaires à la ligne (313).

2. Unité de détermination de niveau (110) selon la revendication 1, dans laquelle l'unité de détermination de niveau (110) est configurée de telle manière que :
- l'intensité de champ (402) du champ magnétique au niveau de la première section du bord magnétique (321) a une première valeur,
- l'intensité de champ (402) du champ magnétique au niveau de la deuxième section du bord magnétique (321) a une deuxième valeur, et
- l'intensité de champ (402) du champ magnétique augmente ou diminue de façon monotone dans les différentes sections entre la première section et la deuxième section du bord magnétique (321).

3. Unité de détermination de niveau (110) selon la revendication 2, dans laquelle l'intensité de champ (402) du champ magnétique augmente ou diminue de façon monotone dans les différentes sections entre la première section et la deuxième section du bord magnétique (321) de telle manière que :
- le champ magnétique présente des valeurs différentes d'intensité de champ dans chaque section entre la première section et la deuxième section du bord magnétique (321), et/ou
- une valeur d'intensité de champ du champ magnétique identifie d'une manière unique la section entre la première section et la deuxième section du bord magnétique (321) qui est placée dans la zone de détection du capteur magnétique (305).

4. Unité de détermination de niveau (110) selon l'une quelconque des revendications 2 à 3, dans laquelle :
- le premier niveau est un niveau de remplissage minimal du liquide (103) dans le récipient (102),
- le deuxième niveau est un niveau de remplissage maximal du liquide (103) dans le récipient (102), et
- la première valeur de l'intensité de champ (402) est l'une d'entre une valeur minimale (405) et une valeur maximale (406) de l'intensité de champ (402), et la deuxième valeur de l'intensité de champ (402) est l'autre d'entre la valeur minimale (405) et la valeur maximale (406) de l'intensité de champ (402).

5. Unité de détermination de niveau (110) selon l'une quelconque des revendications 2 à 4, dans laquelle :
- le bord magnétique (321) comprend au moins N sections différentes entre la première section et la deuxième section, présentant N valeurs d'intensité de champ différentes,
- en particulier, N est égal ou supérieur à 5, ou égal à supérieur à 10, et
- le capteur magnétique (305) est configuré pour distinguer les N valeurs d'intensité de champ différentes.

6. Unité de détermination de niveau (110) selon l'une quelconque des revendications précédentes, dans laquelle :
- la première section du bord magnétique (321) correspond à un premier angle de rotation de la tête (205) autour de l'axe de rotation (204),
- la deuxième section du bord magnétique (321) correspond à un deuxième angle de rotation de la tête (205) autour de l'axe de rotation (204), et
- les différentes sections débutant à la première section et allant jusqu'à la deuxième section du bord magnétique (321) correspondent à des angles de rotation différents (401) débutant au premier angle de rotation et allant jusqu'au deuxième angle de rotation.

7. Unité de détermination de niveau (110) selon l'une quelconque des revendications précédentes, dans laquelle :
le premier aimant (301) et le deuxième aimant (302) sont des aimants permanents.

8. Unité de détermination de niveau (110) selon l'une quelconque des revendications précédentes, dans laquelle le premier aimant (301) et le deuxième aimant (302) sont placés sur une ligne (313) reliant la première poutre radiale (311) à la deuxième poutre radiale (312), de manière à ce que la première poutre radiale (311), la deuxième poutre radiale (312) et la ligne (313) forment un triangle équilatéral.

9. Unité de détermination de niveau (110) selon l'une quelconque des revendications précédentes, dans laquelle l'unité de détermination de niveau (110) comprend un module de commande (101) configuré pour déterminer une valeur du niveau de remplissage (104) du récipient (102) sur la base de données de mesure du capteur magnétique (305) en se servant d'une fonction d'intensité de champ (400) affectant différentes valeurs de l'intensité de champ (402) du champ magnétique à des valeurs correspondantes du niveau de remplissage (104) ou à des valeurs correspondantes d'un angle de rotation (401) de la tête (205).

10. Unité de détermination de niveau (110) selon la revendication 9, dans laquelle :
- la fonction d'intensité de champ (400) dépend du champ magnétique au niveau du bord magnétique (321) de la tête (205), en particulier d'une évolution de l'intensité de champ (402) du champ magnétique le long du bord magnétique (321), et
- la fonction d'intensité de champ (400) est une fonction monotone, en particulier une fonction strictement monotone.

11. Système (100) comprenant :
- un récipient de liquide (102), et
- une unité de détermination de niveau (110) selon l'une quelconque des revendications précédentes, configurée pour déterminer des données de mesure concernant un niveau de remplissage (104) d'un liquide (103) dans le récipient de liquide (102).

12. Système (100) selon la revendication 11, dans lequel le système (100) est un système hydroponique.
